**Europäisches Patentamt**

**European Patent Office**

**Office européen des brevets**

(19)

(11) Veröffentlichungsnummer: **0 104 335**
**B2**

(12) # NEUE EUROPÄISCHE PATENTSCHRIFT

(45) Veröffentlichungstag der neuen Patentschrift:
15.11.89

(51) Int. Cl.⁴: **B 01 D 53/34**

(21) Anmeldenummer: **83106818.4**

(22) Anmeldetag: **12.07.83**

(54) Verfahren zur Reinigung von Abgasen.

(30) Priorität: **24.09.82 DE 3235341**

(43) Veröffentlichungstag der Anmeldung:
**04.04.84 Patentblatt 84/14**

(45) Bekanntmachung des Hinweises auf die Patenterteilung:
**18.12.85 Patentblatt 85/51**

(45) Bekanntmachung des Hinweises auf die Entscheidung
über den Einspruch:
**15.11.89 Patentblatt 89/46**

(84) Benannte Vertragsstaaten:
**AT BE CH DE FR GB IT LI LU NL SE**

(56) Entgegenhaltungen:
**DE-A-1 271 060**
**DE-A-1 542 314**
**DE-A-2 159 186**
**DE-A-2 518 079**
**DE-A-2 739 509**
**DE-A-2 939 908**
**DE-A-3 034 896**
**DE-B-2 331 156**
**SE-A-429 006**
**US-A-3 416 293**
**US-A-3 485 014**
**US-A-3 918 915**
**US-A-3 932 587**
**US-A-4 002 724**

(73) Patentinhaber: **Deutsche Babcock Anlagen Aktiengesellschaft, Duisburger Strasse 375, D-4200 Oberhausen 1 (DE)**

(72) Erfinder: **Kisters, Theodor, Dipl.- Ing., Flensburger Zeile 21, D-4150 Krefeld 1 (DE)**

(74) Vertreter: **Planker, Karl- Josef, Dipl.- Phys., c/o BABCOCK- BSH AKTIENGESELLSCHAFT Parkstrasse 29 Postfach 4 + 6, D-4150 Krefeld 11 (DE)**

EP 0 104 335 B2

## Beschreibung

Die Erfindung betrifft ein Verfahren gemäss dem Oberbegriff des Patentanspruchs 1.

Zur Abtrennung von gasförmigen Schadstoffen wie $SO_2$ und HCl, aus Abgasen, sind seit langem die Nasswaschverfahren bekannt. Diese haben zwei schwere Nachteile:

1. die gelösten oder suspendierten Reaktionsprodukte belasten das Abwasser,
2. die Abgase werden bis unter ihren Taupunkt abgekühlt, so dass eine energieverbrauchende Wiederaufheizung erforderlich ist.

Diese Nachteile werden durch ein sogenanntes "nass-trockenes" Verfahren vermieden, das in der DE-B-2 159 186 beschrieben ist. Dabei wird eine Reagenzlösung innerhalb eines Turmes in den Gasstrom eingesprüht. Die Zufuhr der in Form eines feinen Nebels eingesprühten Reagenzlösung wird derart auf die Konzentration der Verunreinigungen und die Temperatur der zu reinigenden Abgase abgestimmt, dass die Temperatur des den Turm verlassenden Gasstromes über den Taupunkt gehalten, praktisch alle Flüssigkeit im Turm verdampft und das Reaktionsprodukt am Ausgang des Turmes in fester Form erhalten wird. Die erforderliche Menge an Reaktionsmittel ist naturgemäss proportional zur Schadgaskonzentration und entspricht unter günstigen Bedingungen z. B. dem 1,5-fachen stöchiometrischen Verhältnis. Die Wassermenge muss zumindest ausreichen, um das Reaktionsmittel in Lösung bzw. Suspension zu halten. Das Verfahren ist daher auf solche Fälle beschränkt, bei denen der aus der zu verdampfenden Wassermenge errechnete Temperaturabfall kleiner ist als die Differenz zwischen der Anfangstemperatur des Gases und seiner Taupunkttemperatur. Insbesondere bei Dampferzeugern liegt die Temperatur, mit der die Abgase in die Gasreinigung eintreten, aus wärmewirtschaftlichen Gründen relativ niedrig, z. B. bei 130 - 140°C. Am Ausgang der Gasreinigungsstufe soll die Temperatur mindestens noch zwischen 100 und 110°C liegen, um den nötigen Sicherheitsabstand vom Taupunkt einzuhalten. Der Temperaturabfall in der Gasreinigung darf demnach nur etwa 30 betragen. Diese Bedingung lässt sich bei kohle- oder ölgefeuerten Dampferzeugern und bei Verwendung von gelöschtem Kalk als Reaktionsmittel nur erfüllen, wenn der Schwefelgehalt im Brennstoff nicht wesentlich grösser als 1 % ist. Daher ist das "nass-trockene" Verfahren bei der Verfeuerung hochschwefelhaltiger Brennstoffe, deren Schwefelgehalt je nach Herkunft 2 bis 3 % erreichen kann, nicht anwendbar.

Ferner ist es z. B. durch die DE-A-2 520 045 bekannt, fein aufgemahlene Absorptionsmassen, u.a. auch Kalkstaub, trocken in das Rohgas einzublasen. Dabei wird eine Temperaturabsenkung praktisch völlig vermieden. Ein schwerer Nachteil des Trockenverfahrens besteht aber darin, dass eine befriedigende Abscheideleistung, wenn überhaupt, dann nur unter Einsatz einer Menge an Reaktionsmittel erreichbar ist, die das stöchiometrische Verhältnis um ein Mehrfaches übersteigt. Dadurch ergibt sich eine Kostensteigerung, die in vielen Fällen untragbar ist.

In der DE-A-2 518079 wird ein zweistufiges Verfahren beschrieben, bestehend aus einer ersten "nass-trockenen" und einer nachgeschalteten trockenen Stufe. Dabei wird der weitaus grösste Teil der Schadstoffe - z. B. 90 % - auf "nass-trockenem" Wege abgeschieden. Nur der verbleibende geringe Rest wird mit dem Trockenverfahren dem Gasstrom entzogen. Es wird ausdrücklich erwähnt, dass es nicht ökonomisch wäre, mit einer höheren Schadgaskonzentration in die Trockenstufe zu gehen, da nur 7 bis 15 % des Trockenstoffes für die Sorption der Schadgase wirksam sind. Da also nahezu die gesamte Schadgasmenge in der "nass-trockenen" Stufeabgeschieden wird, ist die erforderliche Wassermenge bei diesem 2-stufigen Verfahren nur unwesentlich geringer als bei dem 1-stufigen "nass-trockenen" Verfahren. Hier wie dort bedingen hohe Schadgaskonzentrationen hohe Wassermengen, die wiederum einen starken Temperaturabfall verursachen. Dies wird durch die in der DE-A-2 518 079 angegebenen Beispiele bestätigt, bei denen jeweils in der ersten Stufe ein Temperaturabfall von mehreren hundert °°C verzeichnet ist. Dieses Verfahren unterliegt daher hinsichtlich seiner Anwendung hinter Dampferzeugern den gleichen Beschränkungen wie das "nass-trockene" Verfahren.

Der vorliegenden Erfindung liegt die Aufgabe zugrunde, ein Verfahren der eingangs angegebenen Gattung zu schaffen, bei dem der Temperaturabfall auch unter hohen Schadgaskonzentrationen die bei Dampferzeugungsanlagen zur Verfügung stehende Temperaturspanne nicht überschreitet und bei dem der Verbrauch an Reaktionsmitteln wesentlich geringer ist als bei bekannten trockenen Verfahren.

Diese Aufgabe wird durch die im Kennzeichen des Anspruchs 1 angegebene Massnahme gelöst.

Bei dem Verfahren gemäss der Erfindung wird in der ersten Stufe im Trockenverfahren, d.h. ohne nennenswerte Abkühlung des Gases, der Schadgasgehalt erheblich reduziert, z. B. auf 30 bis 50 % der Anfangskonzentration. Das nur teilweise ausreagierte trockene Reaktionsmittel gelangt ebenso wie das verbliebene Schadgas mit dem Abgasstrom in die zweite Stufe und wird dort angefeuchtet. Dadurch wird es aktiviert, so dass es zu einer erneuten Reaktion mit dem verbliebenen Schadgas fähig ist. Diese Reaktion wird durch die Turbulenz gefördert, die durch die Einsprühung und die Verdampfung des wässerigen Mediums verursacht wird. Der zur Aktivierung der Partikel erforderliche Feuchtegehalt des Gases ist unabhängig von der Menge des in der ersten Stufe zugegebenen Trockenstoffes und damit auch von der anfänglichen Schadgaskonzentration. Daher lässt sich auch bei hohen Schadgaskonzentrationen die Wassermenge so beschränken, dass eine Taupunktunterschreitung vermieden wird.

Die in Anspruch 2 empfohlene Verwendung von reinem Wasser, d.h. Leitungswasser oder Brauchwasser ohne Zusatz von Redaktionsmitteln, ist insbesondere dann vorteilhaft, wenn die Schadgaskonzentration nicht extrem hoch und zeitlich einigermassen konstant ist. Die Vorteile bestehen darin, dass Verstopfungen und Verschleiss der Düsen vermieden werden, dass die Gefahr von Anbackungen an den Wänden dem Reaktionsgefässes praktisch ausgeschaltet ist und dass durch die Verwendung von einfachen Einstoffdüsen Energiekosten gespart werden können.

Insbesondere bei extrem hohen Schadgaskonzentrationen empfiehlt sich jedoch die Zugabe von frischem Reaktionsmittel in gelöster oder suspendierter Form in der zweiten Stufe gemäss Anspruch 3.

Die Steuerung gemäss Anspruch 4 ist vorteilhaft bei Abgasen mit schwankenden Schadgaskonzentrationen.

Durch die Massnahme gemäss Anspruch 5 wird der Verbrauch an Reaktionsmitteln weiter gesenkt.

Durch die Massnahme gemäss Anspruch 6 wird dabei vermieden, dass zusammen mit den Reaktionsprodukten auch Flugasche zurückgeführt wird.

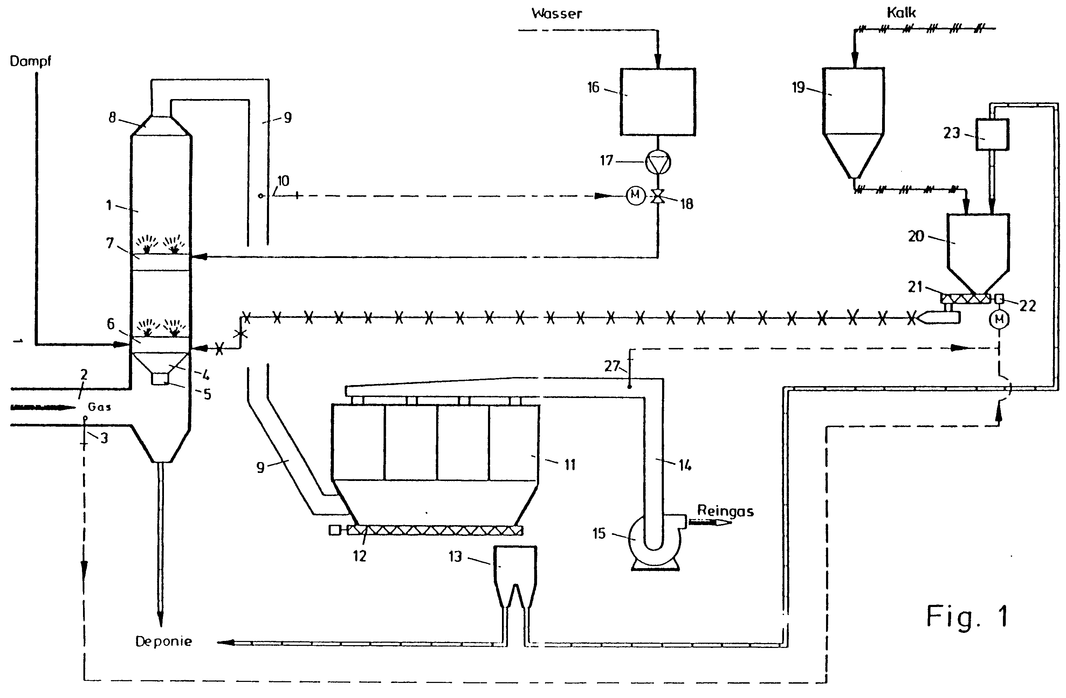

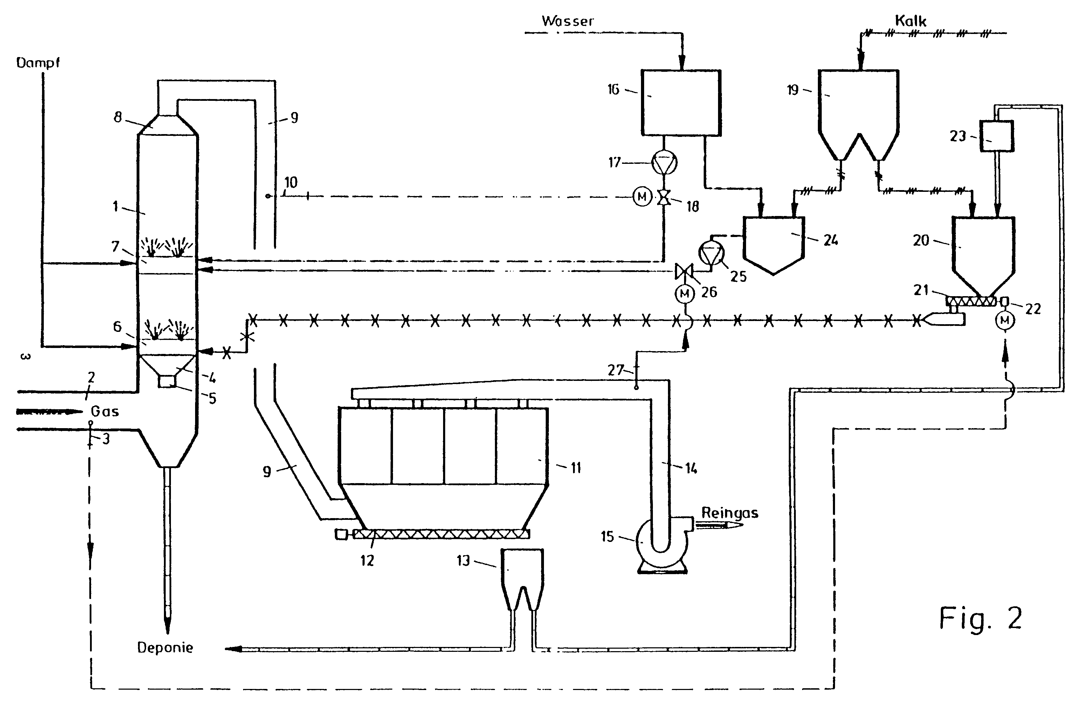

Die Zeichnung dient zur Erläuterung der Erfindung. Die Fig. 1 und 2 zeigen schematisch je ein Ausführungsbeispiel einer Gasreinigungsanlage zur Durchführung des erfindungsgemässen Verfahrens.

In den unteren Teil eines Reaktionsbehälters 1, der die Form eines schlanken, senkrecht stehenden Zylinders hat, mündet tangential, ähnlich wie bei einem Zyklon, eine waagerecht liegende, von einem nicht dargestellten Dampfkessel ausgehende Abgasleitung 2 ein. Darin ist ein Meßstutzen 3 für die Rauchgasmenge und die Schadgaskonzentration angebracht. In geringem Abstand oberhalb der Einmündung der Abgasleitung 2 ist in dem Reaktionsbehälter 1 ein trichterförmiger, den Querschnitt ausfüllender Einsatz 4 mit einem axialen Tauchrohr 5 angeordnet. Darüber befindet sich ein Düsensystem 6. Ein weiteres Düsensystem 7 ist etwa auf halber Höhe zwischen dem Düsensystem 6 und dem oberen Ausgang 8 des Reaktionsbehälters 1 angebracht. Die Düsen der beiden Düsensysteme 6, 7 sind in bekannter Weise in je einer horizontalen Ebene über den Querschnitt des Reaktionsbehälters 1 verteilt. Der Ausgang 8 ist durch eine Leitung 9, die mit einer Temperaturmesseinrichtung 10 ausgestattet ist, mit dem Eingang eines Staubabscheiders 11 verbunden. Der beispielsweise als Gewebefilter ausgeführte Staubabscheider 11 ist mit einer Austragschnecke 12 versehen, unter deren Ausfallende sich ein Silo 13 befindet.

Von dem Staubabscheider 11 ist eine Reingasleitung 14 zu einem Ventilator 15 geführt. Zur Anlage gehören ferner ein Wasserbehälter 16 mit Pumpe 17 und Regelventil 18, ein Kalksilo 19, ein Mischer 20 mit einer Dosier- und Austragvorrichtung 21, deren Antrieb 22 regelbar ist, und eine Mühle 23 für rückgeführte Reaktionsprodukte.

Das mit einer Temperatur von z. B. 140°C einströmende Abgas wird im unteren Teil des Reaktionsbehälters 1 nach dem Fliehkraftprinzip von der mitgeführten Flugasche befreit. Die abgeschiedene Flugasche wird durch den trichterförmigen Bodenauslass kontinuierlich oder chargenweise abgezogen und kann z. B. auf eine Deponie gebracht werden. Das weitgehend entstaubte Abgas gelangt durch das Tauchrohr 5 in den Bereich des Düsensystems 6. Durch das Düsensystem 6 wird mit Hilfe von Dampf ein trockenes pulverförmiges Reaktionsmittel, wie z. B. gelöschter Kalk, ggfls. in Mischung mit rückgeführtem Reaktionsprodukt, eingeblasen, das im mittleren Teil des Reaktionsbehälters 1 eine diffuse Wolke bildet. Darüber, d.h. stromabwärts, wird mit dem Düsensystem 7 Wasser in den Gasstrom eingesprüht. Die Wassermenge wird mittels einer Regelstrecke, die durch eine von der Temperaturmesseinrichtung 10 zu dem Regelventil 18 gezogene gestrichelte Linie symbolisiert ist, so geregelt, dass die Abgastemperatur in der Leitung 9 stets über dem Taupunkt gehalten wird, z. B. auf 105°C. Das in dem Abgas enthaltene Schadgas, z. B. $SO_2$, reagiert im mittleren Teil des Reaktionsbehälters 1 zunächst mit den trockenen Partikeln. Dabei bildet sich an der Oberfläche der Partikel eine dünne, ausreagierte Schicht, die zunächst die Reaktion zum Stillstand bringt. Die Teilchen werden durch den Abgasstrom in den oberen Teil des Reaktionsbehälters getragen und kommen mit dem eingesprühten Wasser in Kontakt. Dabei werden sie durch Diffusionsvorgänge, die im Innern der Partikel ablaufen, wieder reaktionsfähig.

Die Reaktion zwischen Partikeln und Schadgas kommt daher im oberen Teil des Reaktionsbehälters 1 wieder in Gang und setzt sich in der Leitung 9 und innerhalb des Staubabscheiders 11 fort. Die Schadgaskonzentration des über die Leitung 14 und den Ventilator 15 in die Atmosphäre ausgestossenen Reingases liegt unter der vom Gesetzgeber vorgeschriebenen Grenze. Das in dem Staubabscheider 11 anfallende Reaktionsprodukt wird in dem Silo 13 gesammelt und von dort teils einer Deponie zugeführt, teils über die Mühle 23 zu dem Mischer 20 zurückgeführt, wo es zwecks Rezirkulation mit frischem Kalk vermischt wird.

Bei der Anlage gemäss Fig. 2 besteht die zusätzliche Möglichkeit, auch in der zweiten Verfahrensstufe dem Gasstrom Reaktionsmittel zuzugeben, und zwar in Form einer wässerigen Lösung oder Suspension. Zur Herstellung der Lösung oder Suspension ist ein Mischbehälter 24 vorgesehen, der über eine Pumpe 25 und ein Regelventil 26 mit dem Sprühsystem 7 verbunden ist. Das Regelventil 26 ist über eine Regelstrecke mit einer in der Leitung 14 angebrachten Messeinrichtung 27 für die Schadgaskonzentration verbunden.

Dem Mischbehälter 24 werden kontinuierlich in konstantem Mengenverhältnis Wasser aus dem Behälter 16 und Kalk aus dem Silo 19 zugeführt. Daraus wird durch Rühren Kalkmilch von gleichbleibender Konzentration erzeugt. Die Kalkmilch wird in einer Menge, die von der Restkonzentration der Schadgase nach Verlassen des Staubabscheiders 11 abhängt, dem Düsensystem 7 zugeführt. Ausserdem wird dem Düsensystem 7 eine über die Temperatur des aus dem Reaktionsbehälter 1 austretenden Abgases geregelte Menge Wasser zugeführt. Das Düsensystem 7 ist mit Zweistoffdüsen ausgestattet, die mit Dampf beaufschlagt sind.

Diese Variation des erfindungsgemässen Verfahrens empfiehlt sich z. B., wenn neben einer Hauptschadgaskomponente in schwankenden Konzentrationen noch andere Schadgase auftreten, die messtechnisch nicht erfassbar sind, wie z. B. bei Müllverbrennungsanlagen. Der Meßstutzen 3 erfasst nur die Hauptkomponente. Dementsprechend wird die Zugabe des trockenen Reaktionsmittels nur nach der Konzentration der Hauptkomponente bemessen. Da die anderen, nicht erfassten Komponenten ebenfalls Reaktionsmittel verbrauchen, wird die Konzentration der Hauptkomponente in der trockenen Verfahrensstufe nicht in dem vorausberechneten Masse reduziert. Daher erscheint am Messgerät 27 eine erhöhte Konzentration. Dieser Effekt wird durch erhöhte Zugabe von gelöstem oder suspendiertem Reaktionsmittel über das Düsensystem 7 kompensiert.

## Patentansprüche

1. Verfahren zur Reinigung von Abgasen, insbesondere Verbrennungsabgasen, die durch gasförmige Schadstoffe wie $SO_2$ oder HCl belastet sind, wobei dem Abgasstrom in einer Verfahrensstufe ein pulverförmiges Reaktionsmittel und in einer anderen Verfahrensstufe ein wäßriges Medium zugegeben wird und wobei das zugegebene Wasser vollständig verdampft wird, bevor der Abgasstrom mit einer über dem Taupunkt liegenden Temperatur einem Staubabscheider zugeführt wird, dadurch gekennzeichnet, daß die Zugabe des wäßrigen Mediums stromabwärts von der Zugabe des pulverförmigen Reaktionsmittels erfolgt.

2. Verfahren nach Anspruch 1, dadurch gekennzeichnet, dass als wässeriges Medium Wasser verwendet wird.

3. Verfahren nach Anspruch 1, dadurch gekennzeichnet, dass als wässeriges Medium eine wässerige Lösung oder Suspension eines Reaktionsmittels verwendet wird.

4. Verfahren nach Anspruch 3, dadurch gekennzeichnet, dass die Menge des in der ersten Stufe zugegebenen Reaktionsmittels in Abhängigkeit von der Rauchgasmenge und der anfänglichen Schadgaskonzentration und die Menge des in der zweiten Stufe zugegebenen Reaktionsmittels durch die im gereinigten Gas noch enthaltene Schadgaskonzentration geregelt wird.

5. Verfahren nach einem der Ansprüche 1 bis 4, dadurch gekennzeichnet, dass ein Teil des Reaktionsproduktes gemahlen und in Mischung mit frischem Reaktionsmittel wieder zur ersten Verfahrensstufe zurückgeführt wird.

6. Verfahren nach Anspruch 5, dadurch gekennzeichnet, dass der ersten Verfahrensstufe eine Staubabscheidung vorgeschaltet ist.

## Claims

1. A process for purging waste gases, particularly combustion gases polluted by gaseous noxious matter such as $SO_2$ or HCl, by introducing a pulverulent reactant into a process step and an aqueous medium into another process step and by completely evaporizing the added water before the waste gas stream is introduced into a dust precipitator at a temperature below the dew point, characterized by introducing the aqueous medium downstream of the introduction of the pulverulent reactant.

2. Process in accordance with claim 1, characterized by using water for the aqueous medium.

3. Process in accordance with claim 1, characterized by using an aqueous solution or suspension of a reactant for the aqueous medium.

4. Process in accordance with claim 3, characterized by the amount of the reactant introduced in the first step being controlled as a function of the flue gas rate and the initial noxious gas concentration and the amount of the reactant introduced in the second step being controlled as a function of the noxious gas concentration still contained in the purged gas.

5. Process in accordance with one of the claims 1 to 4, characterized by part of the reaction product being ground and recycled to the first process step in a mixture with fresh reactant.

6. Process in accordance with claim 5, characterized by a dust collecting facility being installed upstream of the first process step.

## Revendications

1. Procédé d'épuration de gaz d'échappement, en particulier de gaz d'échappement de combustion, qui sont chargés de substances nocives gazeuses, telles que du $SO_2$ ou du HCl, dans lequel un agent réactionnel pulvérulent est ajouté au courant de gaz d'échappement dans une étape du procédé et un milieu aqueux est ajouté dans une autre étape du procédé et dans lequel l'eau ajoutée est complètement évaporée, avant que le courant de gaz d'échappement ne soit amené à un séparateur de poussières à une température située au-dessus du point de rosée, caractérisé en ce que l'addition du milieu aqueux a lieu en aval de l'addition de l'agent réactionnel pulvérulent.

2. Procédé suivant la revendication 1, caractérisé en ce que, comme milieu aqueux, on utilise de l'eau.

3. Procédé suivant la revendication 1, caractérisé en ce que, comme milieu aqueux, on utilise une suspension ou solution aqueuse d'un agent réactionnel.

4. Procédé suivant la revendication 3, caractérisé en ce que la quantité de l'agent réactionnel ajouté dans la première étape est réglée en fonction de la quantité de gaz de fumée et de la concentration initiale en gaz nocif et en ce que la quantité de l'agent réactionnel ajouté dans la deuxième étape est réglée par la concentration en gaz nocif encore contenue dans le gaz épuré.

5. Procédé suivant l'une des revendications 1 à 4, caractérisé en ce qu'une partie du produit de la réaction est moulue et à nouveau recyclée dans la première étape du procédé, en mélange avec de l'agent réactionnel frais.

6. Procédé suivant la revendication 5, caractérisé en ce qu'une séparation de poussière est prévue en amont de la première étape du procédé.

Dampf

Wasser

Kalk

Gas

Reingas

Deponie

Fig. 1

Fig. 2

Kalk

Wasser

Dampf

Gas

Reingas

Deponie